# EUROPEAN PATENT APPLICATION

(11) **EP 2 692 756 A1**
(43) Date of publication of application: **05.02.2014**
(21) Application number: 13178720.2
(22) Date of filing: 31.07.2013
(51) Int. Cl.: C08G 18/48, C08G 18/79, C08G 18/42, C08G 18/50, C08G 18/22, C09J 175/04

(54) **Resin composition forming a polyurethane, pressure-sensitive adhesive composition, pressure-sensitive adhesive layer, pressure-sensitive adhesive sheet, and surface protective film**

(30) Priority: 31.07.2012 JP 2012169353; 20.05.2013 JP 2013105828
(71) Applicant: NITTO DENKO CORPORATION, Ibaraki-shi, Osaka 567-8680 (JP)
(72) Inventor: Iseki, Toru, Ibaraki-shi, Osaka 567-8680 (JP); Sasaki, Shogo, Ibaraki-shi, Osaka 567-8680 (JP); Jo, Souya, Ibaraki-shi, Osaka 567-8680 (JP); Ando, Masahiko, Ibaraki-shi, Osaka 567-8680 (JP)
(74) Representative: Grünecker, Kinkeldey, Stockmair & Schwanhäusser

(57) **Abstract**

Provided is a resin composition that can serve as a pressure-sensitive adhesive composition that is a material for forming a pressure-sensitive adhesive layer containing a polyurethane-based resin, the resin composition showing extremely high reactivity without any use of a tin compound as a catalyst, allowing a cross-linking reaction between a polyol and a polyfunctional isocyanate compound to rapidly progress, and being capable of providing a pressure-sensitive adhesive layer having high transparency. Also provided is a pressure-sensitive adhesive composition formed of such resin composition. Also provided is a pressure-sensitive adhesive layer having high transparency formed through the use of such pressure-sensitive adhesive composition. Also provided are a pressure-sensitive adhesive sheet and a surface protective film each including such pressure-sensitive adhesive layer. The resin composition includes: a polyol (A) having two or more OH groups; a polyfunctional isocyanate compound (B); and a catalyst (C), in which: the content ratio of the polyfunctional isocyanate compound (B) with respect to 100 parts by weight of the polyol (A) is 1 part by weight to 100 parts by weight; and the catalyst (C) includes an iron complex compound.

## Description

### BACKGROUND OF THE INVENTION

### 1. Field of the Invention

The present invention relates to a resin composition having extremely high reactivity. The present invention also relates to a pressure-sensitive adhesive composition containing such resin composition. The present invention also relates to a pressure-sensitive adhesive layer having high transparency formed through use of such pressure-sensitive adhesive composition. The present invention also relates to a pressure-sensitive adhesive sheet and a surface protective film each including such pressure-sensitive adhesive layer.

### 2. Description of the Related Art

Optical members and electronic members such as an LCD, an organic EL display, a touch panel using such display, a lens portion of a camera, and an electronic device may each have a pressure-sensitive adhesive sheet or a surface protective film attached generally onto an exposed surface side thereof in order to, for example, prevent a flaw from occurring on a surface thereof upon processing, assembly, inspection, transportation, or the like. Such pressure-sensitive adhesive sheet or surface protective film is peeled from the optical member or the electronic member when, for example, the need for surface protection is eliminated.

In more and more cases, the same sheet or film is continuously used as such pressure-sensitive adhesive sheet or surface protective film, from a manufacturing step of the optical member or the electronic member, through an assembly step, an inspection step, a transportation step, and the like, until final shipping. In many of such cases, such pressure-sensitive adhesive sheet or surface protective film is attached, peeled off, and re-attached by manual work in each step.

When the pressure-sensitive adhesive sheet or the surface protective film is attached by manual work, air bubbles may be trapped between an adherend and the pressure-sensitive adhesive sheet or the surface protective film. Accordingly, there have been reported some technologies for improving wettability of a pressure-sensitive adhesive sheet or a surface protective film so that air bubbles may not be trapped upon the attachment. For example, there is known a pressure-sensitive adhesive sheet or surface protective film that uses a silicone resin, which has a high wetting rate, in a pressure-sensitive adhesive layer. However, when the silicone resin is used in the pressure-sensitive adhesive layer, its pressure-sensitive adhesive component is liable to contaminate the adherend, resulting in a problem when the pressure-sensitive adhesive sheet or the surface protective film is used for protecting a surface of a member for which particularly low contamination is required, such as the optical member or the electronic member.

As a pressure-sensitive adhesive sheet or surface protective film that causes less contamination derived from its pressure-sensitive adhesive component, there is known a pressure-sensitive adhesive sheet or surface protective film that uses an acrylic resin in a pressure-sensitive adhesive layer. However,the pressure-sensitive adhesivesheet orsurface protective film that uses the acrylic resin in the pressure-sensitive adhesive layer is poor in wettability, and hence, when the pressure-sensitive adhesive sheet or the surface protective film is attached by manual work, air bubbles may be trapped between the adherend and the sheet or the film. In addition, when the acrylic resin is used in the pressure-sensitive adhesive layer, there is a problem in that an adhesive residue is liable to occur upon peeling, resulting in a problem when the pressure-sensitive adhesive sheet or the surface protective film is used for protecting a surface of a member for which incorporation of foreign matter is particularly undesirable, such as the optical member or the electronic member.

As a pressure-sensitive adhesive sheet or surface protective film that can achieve both of excellent wettability, and low contamination property and adhesive residue reduction, there has recently been reported a pressure-sensitive adhesive sheet or surface protective film that uses a polyurethane-based resin in a pressure-sensitive adhesive layer (see, for example, Japanese Patent Application Laid-open No. 2006-182795).

The polyurethane-based resin is obtained by subjecting a polyol to a cross-linking reaction with a polyfunctional isocyanate compound. Such cross-linking reaction progresses with time, and requires some time before a stable state is achieved. In addition, along with the progress of the cross-linking reaction, a pressure-sensitive adhesive strength to be exhibited also changes. Accordingly, in order to obtain a pressure-sensitive adhesive layer that exhibits a stable pressure-sensitive adhesive strength, it is necessary to complete the cross-linking reaction as rapidly as possible for a pressure-sensitive adhesive composition asa material for forming the pressure-sensitive adhesive layer. In order to rapidly complete the cross-linking reaction between the polyol and the polyfunctional isocyanate compound, a tin compound such as dibutyltin dilaurate or dioctyltin dilaurate has been used as a catalyst heretofore. However, from the viewpoint of environmental friendliness in recent years, restrictions have been placed on use of particular metals such as tin.

In view of the foregoing, there is a demand for a resin composition that can serve as a pressure-sensitive adhesive composition that is a material for forming a pressure-sensitive adhesive layer containing a polyurethane-based resin, the resin composition showing extremely high reactivity without any use of a tin compound as a catalyst, allowing a cross-linking reaction between a polyol and a polyfunctional isocyanate compound to rapidly progress, and being capable of providing a pressure-sensitive adhesive layer having high transparency.

In addition, the pressure-sensitive adhesive sheet or the surface protective film is required to have transparency in many cases. When the pressure-sensitive adhesive sheet or the surface protective film has high transparency, for example, inspection or the like can be accurately performed under a state in which the sheet or the film is attached to the surface of the optical member or the electronic member.

### SUMMARY OF THE INVENTION

An object of the present invention is to provide a resin composition that can serve as a pressure-sensitive adhesive composition that is a material for forming a pressure-sensitive adhesive layer containing a polyurethane-based resin, the resin composition showing extremely high reactivity without any use of a tin compound as a catalyst, allowing a cross-linking reaction between a polyol and a polyfunctional isocyanate compound to rapidly progress, and being capable of providing a pressure-sensitive adhesive layer having high transparency. Another object of the present invention is to provide a pressure-sensitive adhesive composition formed of such resin composition. Still another object of the present invention is to provide a pressure-sensitive adhesive layer having high transparency formed through the use of such pressure-sensitive adhesive composition. Still another object of the present invention is to provide a pressure-sensitive adhesive sheet and a surface protective film each including such pressure-sensitive adhesive layer.

A resin composition of the present invention includes: apolyol (A) having at least two OH groups; a polyfunctional isocyanate compound (B); and a catalyst (C), in which: the content ratio of the polyfunctional isocyanate compound (B) with respect to 100 parts by weight of the polyol (A) is 1 part by weight to 100 parts by weight; and the catalyst (C) includes an iron complex compound.

In a preferred embodiment, the catalyst (C) includes an iron chelate compound.

A pressure-sensitive adhesive composition of the present invention includes the resin composition of the present invention.

A pressure-sensitive adhesive layer of the present invention is obtained by curing the pressure-sensitive adhesive composition of the present invention.

A pressure-sensitive adhesive sheet of the present invention includes: a backing layer; and the pressure-sensitive adhesive layer of the present invention formed on at least one surface of the backing layer.

A surface protective film of the present invention includes: a backing layer; and the pressure-sensitive adhesive layer of the present invention formed on one surface of the backing layer.

According to one embodiment of the present invention, it is possible to provide the resin composition that can serve as a pressure-sensitive adhesive composition that is a material for forming a pressure-sensitive adhesive layer containing a polyurethane-based resin, the resin composition showing extremely high reactivity without any use of a tin compound as a catalyst, allowing a cross-linking reaction between a polyol and a polyfunctional isocyanate compound to rapidly progress, and being capable of providing a pressure-sensitive adhesive layer having high transparency. It is also possible to provide the pressure-sensitive adhesive composition formed of such resin composition. It is also possible to provide the pressure-sensitive adhesive layer having high transparency formed through the use of such pressure-sensitive adhesive composition. It is also possible to provide the pressure-sensitive adhesive sheet and surface protective film each including such pressure-sensitive adhesive layer.

### BRIEF DESCRIPTION OF THE DRAWINGS

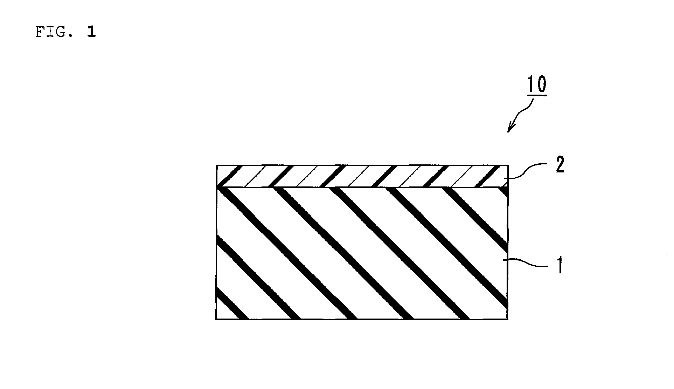

FIG. 1 is a schematic sectional view of a surface protective film according to a preferred embodiment of the present invention.

### DETAILED DESCRIPTION OF THE PREFERRED EMBODIMENTS

### «A. Resin composition»

A resin composition of the present invention contains a polyol (A) having two or more OH groups, a polyfunctional isocyanate compound (B), and a catalyst (C) . The upper limit of the number of OH groups of the polyol (A) is not particularly limited, but is, for example, preferably 10 or less, more preferably 8 or less, still more preferably 6 or less, particularly preferably 4 or less.

In the resin composition of the present invention, the content ratio of the polyfunctional isocyanate compound (B) with respect to 100 parts by weight of the polyol (A) is 1 part by weight to 100 parts by weight, preferably 3 parts by weight to 80 parts by weight, more preferably 5 parts by weight to 60 parts by weight, still more preferably 10 parts by weight to 50 parts by weight, particularly preferably 12 parts by weight to 48 parts by weight. If the content ratio of the polyfunctional isocyanate compound (B) with respect to 100 parts by weight of the polyol (A) is adjusted within the range, the resin composition of the present invention shows extremely high reactivity, a cross-linking reaction between the polyol and the polyfunctional isocyanate compound rapidly progresses upon formation of a pressure-sensitive adhesive layer through the use of a pressure-sensitive adhesive composition containing the resin composition, and a pressure-sensitive adhesive layer having high transparency can be formed.

In the resin composition of the present invention, an equivalent ratio "NCO group/OH group" between NCO groups and OH groups in the polyol (A) and the polyfunctional isocyanate compound (B) is preferably 1.0 to 5.0, more preferably 1.3 to 4.2, still more preferably 1.4 to 3.8, particularly preferably 1.5 to 3.5. When the equivalent ratio "NCO group/OH group" is adjusted within the range, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

In the resin composition of the present invention, the catalyst (C) is an iron complex compound. Through the adoption of the iron complex compound as the catalyst (C), the resin composition of the present invention shows extremely high reactivity, a cross-linking reaction between the polyol and the polyfunctional isocyanate compound rapidly progresses upon formation of a pressure-sensitive adhesive layer through the use of a pressure-sensitive adhesive composition containing the resin composition, and a pressure-sensitive adhesive layer having high transparency can be formed.

In the resin composition of the present invention, the catalysts (C) may be used alone or in combination.

An example of the iron complex compound is a compound represented by the general formula (1): Fe(X)a(Y)b(Z)c. In the general formula (1), a, b, and c each represent an integer of 0 to 3 and a relationship of a+b+c=3 or a+b+c=2 is satisfied. In addition, in the general formula (1), (X), (Y), and (Z) each represent a ligand for Fe . X, Y, and Z each represents, for example, a β-diketone or a β-keto ester.

When X, Y, and Z each represent a β-diketone, examples of the β-diketone include acetylacetone, hexane-2,4-dione, heptane-2,4-dione, heptane-3,5-dione, 5-methylhexane-2,4-dione, octane-2,4-dione, 6-methylheptane-2,4-dione, 2,6-dimethylheptane-3,5-dione, nonane-2,4-dione, nonane-4,6-dione, 2,2,6,6-tetramethylheptane-3,5-dione, tridecane-6,8-dione, 1-phenylbutane-1,3-dione, hexafluoroacetylacetone, and ascorbic acid.

When X, Y, and Z each represent a β-keto ester, examples of the β-keto ester include methyl acetoacetate, ethyl acetoacetate, n-propyl acetoacetate, isopropyl acetoacetate, n-butyl acetoacetate, sec-butyl acetoacetate, tert-butyl acetoacetate, methyl propionylacetate, ethyl propionylacetate, n-propyl propionylacetate, isopropyl propionylacetate, n-butyl propionylacetate, sec-butyl propionylacetate, tert-butyl propionylacetate, benzyl acetoacetate, dimethyl malonate, and diethyl malonate.

In the resin composition of the present invention, of the iron complex compounds, an iron chelate compound is preferred as the catalyst (C). Such iron chelate compound is preferably an iron chelate compound having a β-diketone as a ligand, more preferably tris(acetylacetonato)iron. When such compound is adopted as the catalyst (C), the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

In the resin composition of the present invention, the content ratio of the catalyst (C) with respect to 100 parts by weight of the polyol (A) is preferably 0.0005 part by weight to 0.5 part by weight, more preferably 0.0006 part by weight to 0.4 part by weight, still more preferably 0.008 part by weight to 0.2 part by weight, particularly preferably 0.01 part by weight to 0.1 part by weight. When the content ratio of the catalyst (C) with respect to 100 parts by weight of the polyol (A) is adjusted within the range, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed. If the content ratio of the catalyst (C) with respect to 100 parts by weight of the polyol (A) is excessively high, an increase in viscosity is liable to occur in a stage where the resin composition is stored as it is, and, when a pressure-sensitive adhesive layer is formed through the use of a pressure-sensitive adhesive composition containing the resin composition, its pressure-sensitive adhesive characteristic may be adversely affected. If the content ratio of the catalyst (C) with respect to 100 parts by weight of the polyol (A) is excessively low, the progress of the cross-linking reaction is retarded, and, when a pressure-sensitive adhesive layer is formed through the use of a pressure-sensitive adhesive composition containing the resin composition, its pressure-sensitive adhesive characteristic may be adversely affected.

The polyol (A) may contain only one kind of polyol, or may contain two or more kinds of polyols. In the present invention, even when the polyol (A) contains only one kind of polyol, the effects of the present invention can be sufficiently exhibited. However, when the polyol (A) contains two or more kinds of polyols, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

When the polyol (A) contains only one kind of polyol, the number-average molecular weight Mn of the polyol (A) is preferably 500 to 20,000, more preferably 800 to 15, 000, particularlypreferably 1,000 to 12,000. When such polyol (A) is adopted, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

When the polyol (A) contains two or more kinds of polyols, it is preferred that at least one kind of the two or more kinds of polyols be a polyol having two or more OH groups and a number-average molecular weight Mn of 3,200 to 20, 000, and at least one kind thereof be a polyol having three or more OH groups and a number-average molecular weight Mn of 400 to 3,200, and it is more preferred that at least one kind of the two or more kinds of polyols be a polyol having two or more OH groups and a number-average molecular weight Mn of 3,500 to 12,000, and at least one kind thereof be a polyol having three or more OH groups and a number-average molecular weight Mn of 400 to 3,200. When such polyol (A) is adopted, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

When the polyol (A) contains two or more kinds of polyols, the polyol (A) contains the polyol having two or more OH groups and a number-average molecular weight Mn of 3,200 to 20,000 at preferably 50 wt% or more, more preferably 55 wt% or more, still more preferably 60 wt% or more, still more preferably 62 wt% or more, particularly preferably 65 wt% or more, most preferably 67 wt% or more. When such polyol (A) is adopted, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

When the polyol (A) contains two or more kinds of polyols, the polyol having two or more OH groups and a number-average molecular weight Mn of 3,200 to 20,000 that may be contained in the polyol (A) has a number-average molecular weight Mn of preferably 3,200 to 18,000, more preferably 3,500 to 16,000, still more preferably 3, 500 to 14, 000, particularly preferably 3, 500 to 12, 000. When the number-average molecular weight Mn of the polyol having two or more OH groups that may be contained in the polyol (A) is adjusted within the range, the resin composition of the present invention shows more extremely high reactivity, a cross-linking reaction between the polyol and the polyfunctional isocyanate compound more rapidly progresses upon formation of a pressure-sensitive adhesive layer through the use of a pressure-sensitive adhesive composition containing the resin composition, and a pressure-sensitive adhesive layer having higher transparency can be formed.

Examples of the polyol (A) include a polyester polyol, a polyether polyol, a polycaprolactone polyol, a polycarbonate polyol, and a castor oil-based polyol.

The polyester polyol can be obtained by, for example, an esterification reaction between a polyol component and an acid component.

Examples of the polyol component include ethylene glycol, diethylene glycol, 1,4-butanediol, 1,3-butanediol, neopentyl glycol,1,6-hexanediol,1,2-hexanediol,3-methyl-1,5-pentanediol, 2-butyl-2-ethyl-1,3-propanediol, 2,4-diethyl-1,5-pentanediol, 1,8-octanediol, 1,9-nonanediol, 2-methyl-1,8-octanediol, 1,8-decanediol, octadecanediol, glycerin, trimethylolpropane, pentaerythritol, hexanetriol, and polypropylene glycol.

Examples of the acid component include succinic acid, methylsuccinic acid, adipic acid, pimelic acid, azelaic acid, sebacic acid, 1,12-dodecanedioicacid,1,14-tetradecanedioicacid, dimer acid, 2-methyl-1,4-cyclohexanedicarboxylic acid, 2-ethyl-1,4-cyclohexanedicarboxylic acid, terephthalic acid, isophthalic acid, phthalic acid, isophthalic acid, terephthalic acid,1,4-naphthalenedicarboxylicacid,4,4'-biphenyldicarboxylic acid, and acid anhydrides thereof.

Examples of the polyether polyol include a polyether polyol obtained by subjecting an alkylene oxide such as ethylene oxide, propylene oxide, or butylene oxide to addition polymerization through the use of an initiator such as water, a low-molecular-weight polyol (such as propylene glycol, ethylene glycol, glycerin, trimethylolpropane, or pentaerythritol), a bisphenol (such as bisphenol A), or dihydroxybenzene (such as catechol, resorcin, or hydroquinone). Specific examples thereof include polyethylene glycol, polypropylene glycol, and polytetramethylene glycol.

An example of the polycaprolactone polyol is a caprolactone-type polyester diol obtained by subjecting a cyclic ester monomer such as ε-caprolactone or σ-valerolactone to ring-opening polymerization.

Examples of the polycarbonate polyol include: a polycarbonate polyol obtained by subjecting the polyol component and phosgene to a polycondensation reaction; a polycarbonate polyol obtained by subjecting the polyol component and a carbonic acid diester such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate to transesterification and condensation; a copolymerized polycarbonate polyolobtained by using two or more kinds of the polyol components in combination; a polycarbonate polyol obtained by subjecting each of the various polycarbonate polyols and a carboxyl group-containing compound to an esterification reaction; a polycarbonate polyol obtained by subjecting each of the various polycarbonate polyols and a hydroxyl group-containing compound to an etherification reaction; a polycarbonate polyol obtained by subjecting each of the various polycarbonate polyols and an ester compound to a transesterification reaction; a polycarbonate polyol obtained by subjecting each of the various polycarbonate polyols and a hydroxyl group-containing compound to a transesterification reaction; a polyester-type polycarbonate polyol obtained by subjecting each of the various polycarbonate polyols and a dicarboxylic acid compound to a polycondensation reaction; and a copolymerized polyether-type polycarbonate polyol obtained by subjecting each of the various polycarbonate polyols and an alkylene oxide to copolymerization.

An example of the castor oil-based polyol is a castor oil-based polyol obtained by allowing a castor oil fatty acid and the polyol component to react with each other. A specific example thereof is a castor oil-based polyol obtained by allowing a castor oil fatty acid and polypropylene glycol to react with each other.

The polyfunctional isocyanate compounds (B) may be used alone or in combination.

Any appropriate polyfunctional isocyanate compound that may be used in a urethane-forming reaction may be adopted as the polyfunctional isocyanate compound (B). Examples of such polyfunctional isocyanate compound (B) include a polyfunctional aliphatic isocyanate compound, a polyfunctional alicyclic isocyanate compound, and a polyfunctional aromatic isocyanate compound.

Examples of the polyfunctional aliphatic isocyanate compound include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate.

Examples of the polyfunctional alicyclic isocyanate compound include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, and hydrogenated tetramethylxylylene diisocyanate.

Examples of the polyfunctional aromatic diisocyanate compound include phenylene diisocyanate, 2, 4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4'-diphenyl ether diisocyanate, 4,4'-diphenyl diisocyanate, 1,5-naphthalene diisocyanate, and xylylene diisocyanate.

The polyfunctional isocyanate compound (B) is preferably a polyfunctional aromatic diisocyanate compound. If the polyfunctional aromatic diisocyanate compound is adopted as the polyfunctional isocyanate compound (B), when a pressure-sensitive adhesive layer is formed through the use of a pressure-sensitive adhesive composition containing the resin composition and a pressure-sensitive adhesive sheet or surface protective film including the layer is produced, whitening can be suppressed and high transparency can be imparted.

The resin composition of the present invention may contain a compound (D) that undergoes keto-enol tautomerization. The keto-enol tautomerization refers to, as is generally well known, isomerization in which a hydrogen atom bonded to an α-carbon atom of a carbonyl compound is transferred to the oxygen atom of a carbonyl group, the isomerization being also known as the so-called enolization. By virtue of the fact that the resin composition of the present invention contains the compound (D) that undergoes keto-enol tautomerization, through an interaction with the catalyst (C), a pot life in a stage where the resin composition is stored as it is can be sufficiently lengthened, while, upon formation of a pressure-sensitive adhesive layer through the use of a pressure-sensitive adhesive composition containing the resin composition, a cross-linking reaction between the polyol and the polyfunctional isocyanate compound rapidly progresses.

Examples of the compound (D) that undergoes keto-enol tautomerization include: β-diketones such as acetylacetone, hexane-2,4-dione, heptane-2,4-dione, heptane-3,5-dione, 5-methylhexane-2,4-dione, octane-2,4-dione, 6-methylheptane-2,4-dione, 2,6-dimethylheptane-3,5-dione, nonane-2,4-dione, nonane-4,6-dione, 2,2,6,6-tetramethylheptane-3,5-dione, tridecane-6,8-dione, 1-phenylbutane-1,3-dione, hexafluoroacetylacetone, and ascorbic acid; β-keto esters such as methyl acetoacetate, ethyl acetoacetate, n-propyl acetoacetate, isopropyl acetoacetate, n-butyl acetoacetate, sec-butyl acetoacetate, tert-butyl acetoacetate, methyl propionylacetate, ethyl propionylacetate, n-propyl propionylacetate, isopropyl propionylacetate, n-butyl propionylacetate, sec-butyl propionylacetate, tert-butyl propionylacetate, benzyl acetoacetate, dimethyl malonate, and diethyl malonate; acid anhydrides such as acetic anhydride; and ketones such as acetone, methyl ethyl ketone, methyl n-butyl ketone, methyl isobutyl ketone, methyl tert-butyl ketone, methyl phenyl ketone, and cyclohexanone.

In the resin composition of the present invention, the compound (D) that undergoes keto-enol tautomerization is preferably a β-diketone, more preferably acetylacetone. If such compound is adopted as the compound (D) that undergoes keto-enol tautomerization, a pot life in a stage where the resin composition is stored as it is can be still more sufficiently lengthened, while a cross-linking reaction between the polyol and the polyfunctional isocyanate compound still more rapidly progresses upon formation of a pressure-sensitive adhesive layer through the use of a pressure-sensitive adhesive composition containing the resin composition.

When the resin composition of the present invention contains the compound (D) that undergoes keto-enol tautomerization, a content ratio "compound (D)/catalyst (C)" of the compound (D) to the catalyst (C) is preferably 0.006 to 300, more preferably 0.007 to 100, still more preferably 0.008 to 20, still more preferably 0.009 to1.1, still more preferably 0.010 to 1.0, stillmorepreferably 0. 010 to 0.9, particularly preferably 0. 010 to 0.8, most preferably 0.010 to 0.7 in terms of a molar ratio. If the content ratio of the compound (D) to the catalyst (C) is adjusted within the range, a pot life in a stage where the resin composition is stored as it is can be still more sufficiently lengthened, while a cross-linking reaction between the polyol and the polyfunctional isocyanate compound still more rapidly progresses upon formation of a pressure-sensitive adhesive layer through the use of a pressure-sensitive adhesive composition containing the resin composition. In addition, particularly if the molar ratio "compound (D)/catalyst (C)" falls within the range of 0.006 to 0.7, when a pressure-sensitive adhesive layer is formed through the use of a pressure-sensitive adhesive composition containing the resin composition and a pressure-sensitive adhesive sheet or surface protective film including the layer is produced, whitening can be effectively suppressed and very high transparency can be imparted.

The resin composition of the present invention preferably contains any appropriate solvent. The total content ratio of the polyol (A) having two or more OH groups, the polyfunctional isocyanate compound (B), and the catalyst (C) in the solid content (components except the solvent) of the resin composition of the present invention is preferably 50 wt% to 100 wt%, more preferably 70 wt% to 100 wt%, still more preferably 90 wt% to 100 wt%, particularly preferably 95 wt% to 100 wt%, most preferably 98 wt% to 100 wt%.

The resin composition of the present invention may contain any appropriate other component as long as the effects of the present invention are not impaired. Examples of such other component include an additional resin component that is not a polyurethane-based resin, a tackifier, an inorganic filler, an organic filler, metal powder, a pigment, a foil-shaped material, a softener, a plasticizer, an age resistor, a conductive agent, a UV absorbing agent, an antioxidant, a light stabilizer, a surface lubricating agent, a leveling agent, a corrosion inhibitor, a heat stabilizer, a polymerization inhibitor, and a lubricant.

### «B. Pressure-sensitive adhesive composition and pressure-sensitive adhesive layer»

A pressure-sensitive adhesive composition of the present invention contains the resin composition of the present invention. The content ratio of the resin composition of the present invention in the pressure-sensitive adhesive composition of the present invention is preferably 50 wt% to 100 wt%, more preferably 70 wt% to 100 wt%, still more preferably 90 wt% to 100 wt%, particularly preferably 95 wt% to 100 wt%, most preferably 98 wt% to 100 wt%. If the content ratio of the resin composition of the present invention in the pressure-sensitive adhesive composition of the present invention is adjusted within the range, the pressure-sensitive adhesive composition of the present invention shows more extremely high reactivity, a cross-linking reaction between the polyol and the polyfunctional isocyanate compound more rapidly progresses upon formation of a pressure-sensitive adhesive layer through the use of the pressure-sensitive adhesive composition, and a pressure-sensitive adhesive layer having higher transparency can be formed.

The pressure-sensitive adhesive composition of the present invention may contain any appropriate component that is not the resin composition of the present invention as long as the effects of the present invention are not impaired. Examples of such component include any appropriate resin component, tackifier, inorganic filler, organic filler, metal powder, pigment, foil-shaped material, softener, plasticizer, age resistor, conductive agent, UV absorbing agent, antioxidant, light stabilizer, surface lubricating agent, leveling agent, corrosion inhibitor, heat stabilizer, polymerization inhibitor, and lubricant.

A pressure-sensitive adhesive layer of the present invention is obtained by curing the pressure-sensitive adhesive composition of the present invention.

A generally used method such as a urethane-forming reaction method involving using bulk polymerization, solution polymerization, or the like may be adopted as a method of obtaining the pressure-sensitive adhesive layer of the present invention by curing the pressure-sensitive adhesive composition of the present invention. The pressure-sensitive adhesive layer may be obtained by being formed through application onto any appropriate support. In this case, a member that serves as a backing layer of a surface protective film may be used as the support, or a pressure-sensitive adhesive layer obtained by being formed on any appropriate other support may be finally transferred onto a member that serves as a backing layer of a surface protective film to thereby produce a surface protective film.

As a method of applying the pressure-sensitive adhesive composition of the present invention, there are given, for example, roll coating, gravure coating, reverse coating, roll brushing, spray coating, air knife coating, and extrusion coating with a die coater.

Any appropriate thickness maybe adopted as the thickness of the pressure-sensitive adhesive layer of the present invention depending on applications. The thickness of the pressure-sensitive adhesive layer is preferably 1 µm to 1,000 µm, more preferably 3 µm to 800 µm, still more preferably 5 µm to 500 µm. When the pressure-sensitive adhesive layer of the present invention is used as a surface protecting film, the thickness of the pressure-sensitive adhesive layer is preferably 1 µm to 100 µm, more preferably 3 µm to 50 µm, still more preferably 5 µm to 30 µm.

The pressure-sensitive adhesive layer of the present invention preferably has high transparency. When the pressure-sensitive adhesive layer of the present invention has high transparency, inspection or the like can be accurately performed under a state in which the layer is attached to the surface of an optical member or an electronic member. The pressure-sensitive adhesive layer of the present invention has a haze of preferably 5% or less, more preferably 4% or less, still more preferably 3% or less, particularly preferably 2% or less, most preferably 1% or less.

The pressure-sensitive adhesive layer of the present invention has a gel fraction at room temperature immediately after its formation of preferably 20% or more, more preferably 30% or more, still more preferably 40% or more, still more preferably 50% or more, still more preferably 60% or more, still more preferably 70% or more, particularly preferably 80% or more, most preferably 90% or more. When the gel fraction of the pressure-sensitive adhesive layer of the present invention at room temperature immediately after its formation is adjusted within the range, the pressure-sensitive adhesive layer of the present invention can be a pressure-sensitive adhesive layer obtained through more rapid progress of a cross-linking reaction between the polyol and the polyfunctional isocyanate compound, and can be a pressure-sensitive adhesive layer having higher transparency.

### «C. Pressure-sensitive adhesive sheet and surface protective film»

A pressure-sensitive adhesive sheet of the present invention includes the pressure-sensitive adhesive layer of the present invention on at least one surface of a backing layer. A surface protective film of the present invention includes the pressure-sensitive adhesive layer of the present invention on one surface of a backing layer.

FIG. 1 is a schematic sectional view of a surface protective film according to a preferred embodiment of the present invention. A surface protective film 10 includes a backing layer 1 and a pressure-sensitive adhesive layer 2. The surface protective film of the present invention may further include any appropriate other layer as required (not shown).

For the purpose of, for example, forming a roll body that is easy to rewind, the surface of the backing layer 1 on which the pressure-sensitive adhesive layer 2 is not provided may, for example, be subjected to release treatment with the addition of a fatty acid amide-, polyethyleneimine-, or long-chain alkyl-based additive or the like, or be provided with a coat layer formed of any appropriate peeling agent such as a silicone-based, long-chain alkyl-based, or fluorine-based peeling agent.

The pressure-sensitive adhesive sheet and surface protective film of the present invention may each have attached thereto a peelable liner having releasability.

The thickness of each of the pressure-sensitive adhesive sheet and surface protective film of the present invention may be set to any appropriate thickness depending on applications.

The pressure-sensitive adhesive sheet and surface protective film of the present invention preferably have high transparency. When the pressure-sensitive adhesive sheet and surface protective film of the present invention have high transparency, inspection or the like can be accurately performed under a state in which the sheet or the film is attached to the surface of an optical member or an electronic member. The pressure-sensitive adhesive sheet and surface protective film of the present invention each have a haze of preferably 5% or less, more preferably 4% or less, still more preferably 3% or less, particularly preferably 2% or less, most preferably 1% or less.

Any appropriate thickness may be adopted as the thickness of the backing layer depending on applications. The thickness of the backing layer is preferably 5 µm to 300 µm, more preferably 10 µm to 250 µm, still more preferably 15 µm to 200 µm, particularly preferably 20 µm to 150 µm.

The backing layer may be a single layer, or may be a laminate of two or more layers. The backing layer may be one having been stretched in advance.

Any appropriate material may be adopted as a material for the backing layer depending on applications. Examples of the material include a plastic, paper, a metal film, and a nonwoven fabric. Of those, a plastic is preferred. The materials may be used alone or in combination to construct the backing layer. For example, the layermaybe constructed of two or more kinds of plastics.

Examples of the plastic include a polyester-based resin, a polyamide-based resin, and a polyolefin-based resin. Examples of the polyester-based resin include polyethylene terephthalate, polybutylene terephthalate, and polyethylene naphthalate. Examples of the polyolefin-based resin include a homopolymer of an olefin monomer and a copolymer of olefin monomers. Specific examples of the polyolefin-based resin include: homopolypropylene; propylene-based copolymers such as block, random, and graft copolymers each including an ethylene component as a copolymer component; reactor TPO; ethylene-based polymers such as low density, high density, linear low density, and ultra low density polymers; and ethylene-based copolymers such as an ethylene-propylene copolymer, an ethylene-vinyl acetate copolymer, an ethylene-methyl acrylate copolymer, an ethylene-ethyl acrylate copolymer, an ethylene-butyl acrylate copolymer, an ethylene-methacrylic acid copolymer, and an ethylene-methyl methacrylate copolymer.

The backing layer may contain any appropriate additive as required. Examples of the additive that may be contained in the backing layer include an antioxidant, a UV absorbing agent, a light stabilizer, an antistatic agent, a filler, and a pigment. The kind, number, and amount of the additive that may be contained in the backing layer may be appropriately set depending on purposes. In particular, when the material for the backing layer is a plastic, it is preferred to contain some of the additives for the purpose of, for example, preventing deterioration. From the viewpoint of, for example, the improvement of weather resistance, particularly preferred examples of the additive include an antioxidant, a UV absorbing agent, a light stabilizer, and a filler.

Any appropriate antioxidant may be adopted as the antioxidant. Examples of such antioxidant include a phenol-based antioxidant, a phosphorus-based processing heat stabilizer, a lactone-based processing heat stabilizer, a sulfur-based heat stabilizer, andaphenol-phosphorus-basedantioxidant. Thecontent ratio of the antioxidant is preferably 1 part by weight or less, more preferably 0.5 part by weight or less, still more preferably 0.01 part by weight to 0.2 part by weight with respect to 100 parts by weight of the base resin of the backing layer (when the backing layer is a blend, the blend is the base resin).

Any appropriate UV absorbing agent may be adopted as the UV absorbing agent. Examples of such UV absorbing agent include a benzotriazole-based UV absorbing agent, a triazine-based UV absorbing agent, and a benzophenone-based UV absorbing agent. The content ratio of the UV absorbing agent is preferably 2 parts by weight or less, more preferably 1 part by weight or less, still more preferably 0.01 part by weight to 0.5 part by weight with respect to 100 parts by weight of the base resin that forms the backing layer (when the backing layer is a blend, the blend is the base resin).

Any appropriate light stabilizer may be adopted as the light stabilizer. Examples of such light stabilizer include a hindered amine-based light stabilizer and a benzoate-based light stabilizer. The content ratio of the light stabilizer is preferably 2 parts by weight or less, more preferably 1 part by weight or less, still more preferably 0.01 part by weight to 0.5 part by weight with respect to 100 parts by weight of the base resin that forms the backing layer (when the backing layer is a blend, the blend is the base resin).

Any appropriate filler may be adopted as the filler. An example of such filler is an inorganic filler. Specific examples of the inorganic filler include carbon black, titanium oxide, and zinc oxide. The content ratio of the filler is preferably 20 parts by weight or less, more preferably 10 parts by weight or less, still more preferably 0.01 part by weight to 10 parts by weight with respect to 100 parts by weight of the base resin that forms the backing layer (when the backing layer is a blend, the blend is the base resin).

Further, a surfactant, an inorganic salt, a polyhydric alcohol, a metal compound, an inorganic antistatic agent such as carbon, and low-molecular-weight and high-molecular-weight antistatic agents each intended to impart antistatic property are also preferably given as examples of the additive. Of those, a high-molecular-weight antistatic agent or carbon is particularly preferred from the viewpoints of contamination and the maintenance of pressure-sensitive adhesiveness.

The pressure-sensitive adhesive sheet and surface protective film of the present invention may each be used in any appropriate application. Thepressure-sensitiveadhesivesheetand surface protective film of the present invention are each preferably used for the protection of the surface of an optical member or an electronic member.

The pressure-sensitive adhesive sheet and surface protective film of the present invention may be manufactured by any appropriate method. Such manufacturing method may be performed in conformity with any appropriate manufacturing method such as:
(1) a method involving applying a solution or heat-melt of a material for forming the pressure-sensitive adhesive layer (e.g., the pressure-sensitive adhesive composition of the present invention) onto the backing layer;
(2) a method in accordance with the method (1) involving applying the solution or heat-melt onto a separator, and transferring the formed pressure-sensitive adhesive layer onto the backing layer;
(3) a method involving extruding a material for forming the pressure-sensitive adhesive layer (e.g., the pressure-sensitive adhesive composition of the present invention) onto the backing layer, and forming the layer by application;
(4) a method involving extruding the backing layer and the pressure-sensitive adhesive layer in two or more layers;
(5) a method involving laminating the backing layer with a single layer, i.e., the pressure-sensitive adhesive layer or a method involving laminating the backing layer with two layers, i.e., the pressure-sensitive adhesive layer and a laminate layer; or
(6) a method involving forming the pressure-sensitive adhesive layer and a material for forming the backing layer such as a film or a laminate layer into a laminate of two or more layers.

### Examples

Hereinafter, the present invention is described specifically by way of Examples. However, the present invention is by no means limited to Examples. It should be noted that test and evaluation methods in Examples and the like are as described below. It should be noted that the term "part (s) " in the following description means "part(s) by weight" unless otherwise specified, and the term "%" in the following description means "wt%" unless otherwise specified.

### <Production of surface protective film for evaluation>

A pressure-sensitive adhesive composition formed of a resin composition immediately after its preparation was applied onto a polyethylene terephthalate (PET) film (thickness=38 µm), and was dried at 130°C for 30 seconds, to thereby remove a solvent. Thus, a pressure-sensitive adhesive layer (thickness=10 µm) was formed on the PET film. After that, the pressure-sensitive adhesive layer was covered with a release film that had been subjected to surface treatment with a release agent. The resultant film was left to stand at 50°C for 12 hours, and was then left to stand at room temperature (25°C) for 1 hour to produce a surface protective film for evaluation.

### <Measurement of pressure-sensitive adhesive strength>

Each of the surface protective films for evaluation was measured for its pressure-sensitive adhesive strength. More specifically, each of the produced pressure-sensitive adhesive protective films for evaluation was cut into a size of 20 mm wide by 100 mm long, and its pressure-sensitive adhesive layer surface was brought into pressure contact with the non-tin surface of glass (manufactured by Matsunami Glass Ind. , Ltd. , trade name "Blue plate cut product," thickness: 1.35 mm, 100 mm longx100 mm wide, ground edges) by a method involving rolling a 2-kg roller from one end to the other and back to produce a sample for pressure-sensitive adhesive strength evaluation. The sample for pressure-sensitive adhesive strength evaluation was left to stand under a measurement environment of 23°Cx50%RH for 30 minutes, and was then further left to stand at 50°C for 4 days. After that, the sample was measured for its pressure-sensitive adhesive strength (N/20 mm) with a tensile tester under the conditions of a rate of pulling of 300 mm/min and a peel angle of 180°.

### <Evaluation of transparency>

Each of the surface protective films for evaluation was further left to stand at 50°C for 4 days, and was then calculated for its haze through the use of a haze meter HM-150 (manufactured by MURAKAMI COLOR RESEARCH LABORATORY CO., LTD.) in conformity with JIS-K-7136 on the basis of the following equation: haze (%)=(Td/Tt)×100 (Td: diffuse transmittance, Tt: total light transmittance).

### <Measurement of gel fraction>

A pressure-sensitive adhesive composition formed of a resin composition immediately after its preparation was applied onto a polyethylene terephthalate (PET) film (thickness=38 µm) that had been subjected to surface treatment with a release agent, and was dried at 130°C for 30 seconds, to thereby remove a solvent. Thus, a pressure-sensitive adhesive layer (thickness=10 µm) was formed. After that, the pressure-sensitive adhesive layer was covered with a release film that had been subjected to surface treatment with a release agent. Thus, a sample for gel fraction measurement was obtained.
W1 g (about 0.1 g) of the pressure-sensitive adhesive layer of the resultant sample for gel fraction measurement was taken out within 4 hours after its production, and immersed in ethyl acetate at about 25°C for 1 week. After that, the pressure-sensitive adhesive layer subjected to the immersion treatment was taken out from ethyl acetate and measured for its weight W2 g after drying at 130°C for 2 hours, and a value calculated as (W2/W1)×100(%) was defined as a gel fraction.

### (Example 1)

To 100 parts by weight of a polyol having three OH groups and a number-average molecular weight Mn of 10,000 (manufactured by ASAHI GLASS CO., LTD., PREMINOL S 3011) as the polyol (A) were added 9. 8 parts by weight of a trimer (isocyanurate form) of hexamethylene diisocyanate as a polyfunctional alicyclic isocyanate compound (manufactured by Nippon Polyurethane Industry Co., Ltd., trade name: CORONATE HX) as the polyfunctional isocyanate compound (B), and 0.04 part by weight of tris (acetylacetonato) iron (manufactured by NIHON KAGAKU SANGYO CO., LTD., trade name: Nacem Ferric Iron) as the catalyst (C), and the mixture was diluted with ethyl acetate so as to have a solid content of 35 wt%, followed by stirring to provide a resin composition (1).
The resultant resin composition (1) was defined as a pressure-sensitive adhesive composition (1), and the resin composition (1) or the pressure-sensitive adhesive composition (1) was subjected to the various evaluations.
Table 1 shows the results.

### (Example 2)

A resin composition (2) was obtained in the same manner as in Example 1 except that 100 parts by weight of a polyol having three OH groups and a number-average molecular weight Mn of 2,000 (manufactured by Daicel Corporation, PLACCEL L320AL) were used as the polyol (A).
The resultant resin composition (2) was defined as a pressure-sensitive adhesive composition (2), and the resin composition (2) or the pressure-sensitive adhesive composition (2) was subjected to the various evaluations.
Table 1 shows the results.

### (Example 3)

A resin composition (3) was obtained in the same manner as in Example 1 except that 100 parts by weight of a polyol having two OH groups and a number-average molecular weight Mn of 2,000 (manufactured by Daicel Corporation, PLACCEL CD220PL) were used as the polyol (A).
The resultant resin composition (3) was defined as a pressure-sensitive adhesive composition (3), and the resin composition (3) or the pressure-sensitive adhesive composition (3) was subjected to the various evaluations.
Table 1 shows the results.

### (Example 4)

To 70 parts by weight of a polyol having two OH groups and a number-average molecular weight Mn of 5,500 (manufactured by ASAHI GLASS CO., LTD., PREMINOL S 4006), 18 parts by weight of a polyol having three OH groups and a number-average molecular weight Mn of 1,500 (manufactured by Sanyo Chemical Industries, Ltd., SANNIX GP-1500), and 12 parts by weight of a polyol having four OH groups and a number-average molecular weight Mn of 1,100 (manufactured by ADEKA CORPORATION, EDP-1100) as the polyol (A) were added 40 parts by weight of a trimethylolpropane/tolylenediisocyanate trimer adduct (manufactured by Nippon Polyurethane Industry Co., Ltd., trade name: CORONATE L) as the polyfunctional isocyanate compound (B) and 0.04 part by weight of tris(acetylacetonato)iron (manufactured by NIHON KAGAKU SANGYO CO., LTD., trade name: Nacem Ferric Iron) as the catalyst (C), and the mixture was diluted with ethyl acetate so as to have a solid content of 35 wt%, followed by stirring to provide a resin composition (4).
The resultant resin composition (4) was defined as a pressure-sensitive adhesive composition (4), and the resin composition (4) or the pressure-sensitive adhesive composition (4) was subjected to the various evaluations.
Table 1 shows the results.

### (Example 5)

To 85 parts by weight of a polyol having three OH groups and a number-average molecular weight Mn of 10,000 (manufactured by ASAHI GLASS CO., LTD., PREMINOL S 3011), 12 parts by weight of a polyol having three OH groups and a number-average molecular weight Mn of 3,000 (manufactured by Sanyo Chemical Industries, Ltd., SANNIX GP-3000), and 3 parts by weight of a polyol having three OH groups and a number-average molecular weight Mn of 1,000 (manufactured by Sanyo Chemical Industries, Ltd., SANNIX GP-1000) as the polyol (A) were added 15 parts by weight of a trimer (isocyanurate form) of hexamethylene diisocyanate as a polyfunctional alicyclic isocyanate compound (manufactured by Nippon Polyurethane Industry Co. , Ltd. , trade name: CORONATE HX) as the polyfunctional isocyanate compound (B) and 0.04 part by weight of tris(acetylacetonato)iron (manufactured by NIHON KAGAKU SANGYO CO., LTD., trade name: Nacem Ferric Iron) as the catalyst (C), and the mixture was diluted with ethyl acetate so as to have a solid content of 35 wt%, followed by stirring to provide a resin composition (5).
The resultant resin composition (5) was defined as a pressure-sensitive adhesive composition (5), and the resin composition (5) or the pressure-sensitive adhesive composition (5) was subjected to the various evaluations.
Table 1 shows the results.

### (Comparative Example 1)

A resin composition (C1) was obtained in the same manner as in Example 1 except that 0.04 part by weight of tris (acetylacetonato) aluminum (Al(acac)₃) (manufactured by Kawaken Fine Chemicals Co., Ltd., trade name: Alumichelate A(W)) was used as the catalyst (C).
The resultant resin composition (C1) was defined as a pressure-sensitive adhesive composition (C1), and the resin composition (C1) or the pressure-sensitive adhesive composition (C1) was subjected to the various evaluations.
Table 1 shows the results.

### (Comparative Example 2)

A resin composition (C2) was obtained in the same manner as in Example 1 except that 0.055 part by weight of ferric 2-ethylhexanoate (Fe(2eh)₃) (manufactured by NIHON KAGAKU SANGYO CO. , LTD. , trade name: NIKKA OCTHIX Fe 6% (T)) was used as the catalyst (C).
The resultant resin composition (C2) was defined as a pressure-sensitive adhesive composition (C2), and the resin composition (C2) or the pressure-sensitive adhesive composition (C2) was subjected to the various evaluations.
Table 1 shows the results.

### (Comparative Example 3)

A resin composition (C3) was obtained in the same manner as in Example 1 except that 0.035 part by weight of ferrous naphthenate (Fe(nap)₃) (manufactured by NIHON KAGAKU SANGYO CO., LTD., trade name: NAPHTHEX Fe 5%(T)) was used as the catalyst (C).
The resultant resin composition (C3) was defined as a pressure-sensitive adhesive composition (C3), and the resin composition (C3) or the pressure-sensitive adhesive composition (C3) was subjected to the various evaluations.
Table 1 shows the results.

### (Comparative Example 4)

A resin composition (C4) was obtained in the same manner as in Example 1 except that 0.04 part by weight of dioctyltin dilaurate (manufactured by Tokyo Fine Chemical CO., LTD. , trade name: EMBILIZER OL-1) was used as the catalyst (C).
The resultant resin composition (C4) was defined as a pressure-sensitive adhesive composition (C4), and the resin composition (C4) or the pressure-sensitive adhesive composition (C4) was subjected to the various evaluations.
Table 1 shows the results.

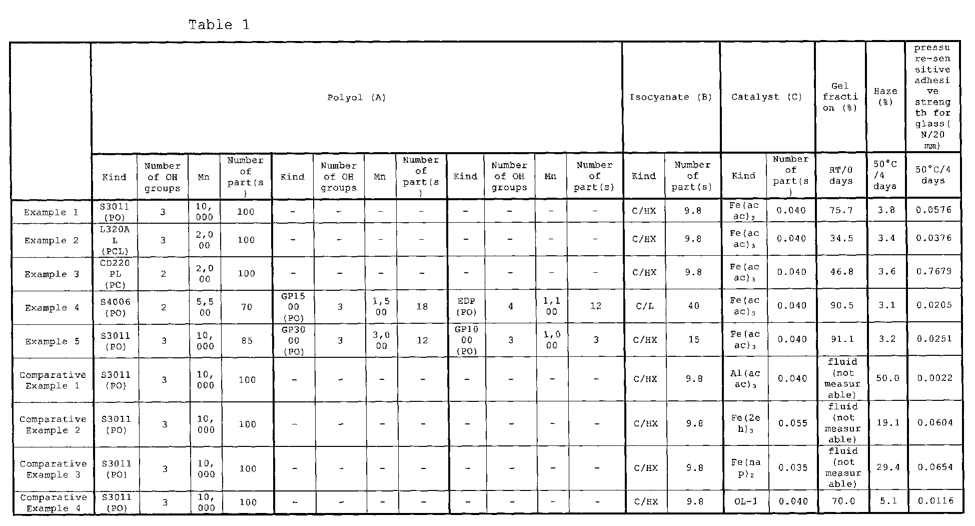

The pressure-sensitive adhesive sheet and the surface protective film each including the pressure-sensitive adhesive layer formed through the use of the pressure-sensitive adhesive composition containing the resin composition of the present invention can each be used in, for example, an application in which the sheet or the film is attached to the surface of an optical member or an electronic member to protect the surface.

## Claims

1. A resin composition, comprising:
a polyol (A) having at least two OH groups;
a polyfunctional isocyanate compound (B); and
a catalyst (C),
wherein:
a content ratio of the polyfunctional isocyanate compound (B) with respect to 100 parts by weight of the polyol (A) is 1 part by weight to 100 parts by weight; and
the catalyst (C) comprises an iron complex compound.

2. A resin composition according to claim 1, wherein the catalyst (C) comprises an iron chelate compound.

3. A pressure-sensitive adhesive composition, comprising the resin composition according to claim 1 or 2.

4. A pressure-sensitive adhesive layer, which is obtained by curing the pressure-sensitive adhesive composition according to claim 3.

5. A pressure-sensitive adhesive sheet, comprising:
a backing layer; and
the pressure-sensitive adhesive layer according to claim 4 formed on at least one surface of the backing layer.

6. A surface protective film, comprising:
a backing layer; and
the pressure-sensitive adhesive layer according to claim 4 formed on one surface of the backing layer.
